Europäisches Patentamt

European Patent Office

Office européen des brevets

(11) Publication number: **0 152 724**
**B1**

# EUROPEAN PATENT SPECIFICATION

(45) Date of publication of patent specification: **31.10.90**

(21) Application number: **84830042.2**

(22) Date of filing: **17.02.84**

(51) Int. Cl.⁵: **F 26 B 17/18, B 30 B 9/12**

(54) Screw drier particularly for plastic materials, operated by an electric motor through a reducer.

(43) Date of publication of application:
**28.08.85 Bulletin 85/35**

(45) Publication of the grant of the patent:
**31.10.90 Bulletin 90/44**

(84) Designated Contracting States:
**DE FR GB IT**

(56) References cited:
**DE-B-1 284 145**
**FR-A-1 060 120**
**FR-A-1 236 169**
**FR-A-2 522 585**
**GB-A- 951 520**
**US-A-1 835 789**
**US-A-2 149 736**
**US-A-3 768 171**

(73) Proprietor: **COSTARELLI, Edoardo**
**Località Strozzacapponi**
**I-06070 San Mariano (Perugia) (IT)**

(72) Inventor: **COSTARELLI, Edoardo**
**Località Strozzacapponi**
**I-06070 San Mariano (Perugia) (IT)**

(74) Representative: **Fiammenghi Domenighetti,**
**Delfina et al**
**Via Quattro Fontane 31**
**I-00184 Rome (IT)**

Courier Press, Leamington Spa, England.

## Description

This invention concerns a screw drier, particularly for plastic materials being treated in a recovery and regeneration line for waste plastic, consisting in a drier casing wherein, extended in length, a channel is placed for drying the material with a higher inlet opening and an output extremity; a feeding hopper being placed on said inlet opening and a material screw conveyor consisting in a shaft and in turns placed within said channel.

It is known that thermoplastic materials like PVC, polyethylene, polypropylene, etc. for various uses, such as shopping bags, packing sacks, greenhouse awnings, etc., are recovered after use to be recycled to prepare new products. To this end the waste is run through a series of shearing, washing and regranulation operations to prepare a material in granular form for extrusion or injection. After shearing and washing, and before densification, the washed material must be dried. Currently, this operation is effected in tunnel driers generally powered by diesel fuel, electricity or steam. In all these cases, a large amount of energy is expended for the operation. If oil is used, a supply system must also be installed with a tank, tubes and pump, which of course then require maintenance. Also, if steam is used, a supplementary system is required with a steam generator and distribution network, also requiring maintenance. If electricity is used, costs are extremely high to satisfy the power requirements for the hourly absorption of the resistors which feed the tunnel. Of course, one must in all cases add the costs of installation, maintenance and/or power requirements to the already high cost of the electric power. These power requirements are more or less reproduced as a fixed cost on each invoice frmm the power supplier. Furthermore, tunnel diers do not give optimal results in terms of the subsequent densifiction. This is due to the difficultly of the tunnel to optimally absorb the humidity lost by the material being dried.

However, screw devices to press materials extracting liquid therefrom, are already known. For example US Patent 2,560,147 discloses such a device for extracting solvent from solid materials; the US Patent 797,374 discloses a screw machine for pressing water from wood pulp; the FR Patent 2,413,206 discloses a non-return device for continuous presses or for archimedean screw press; the German laid open Patent application DE 3013 091 concerns a mechanism which dewaters and compresses raked-up material; the US Patent 1,299,524 discloses a device to press pulps; the French Patent FR 2,447,269 concerns an archimedean screw-press. The US Patent 4,054,403 discloses an extruder with dual flighted extrusion screw, comprising therein collars to heat the material to be drawn.

US Patent 3,768,171 discloses a process and apparatus for removing excess water and straining from wet elastomeric materials, as synthetic rubbers, which process is based on repeated mechanical squeezing steps, carried out by a particularly shaped screw conveyor. Said aforementioned process and apparatus permit only to remove a part of the water content, but they do not permit to obtain a well dried material in loose condition.

The subject-matter of GB—A—951.520 is very similar to the preceding one but is provided for dewatering solid-liquid suspensions, such a suspension of fibers, by expressing fluid from the liquid suspension. The treated meterial forms a solid, but not dried cake, since the expressing steps can not dry the material and discharging this latter it in loose condition.

None of the cited references concern a screw device suitable to press plastic material as to dry it.

For example, in the use of a screw-press placed in a channel, feeded by a hopper, to regenerate waster plastic material the extension of the turns must be limited to a distance which exceeds by a little the width of the hopper, but does not exceed a predetermined limit beyond said hopper as hereinbelow more detailed.

Means to break up the material to be pressed into small pieces are not provided in the above cited references. In the US Patent 2,560,147 the disclosed knives or stops are fixed on the drier housing and extended in radial sense within the channel between a helical vane and separated turns for preventing rotation en masse of the solid material.

The US Patent 797,374 provides liquid outlet openings only in the lower part of the channel and this is insufficient to expel the water from the pressed material.

Heaters provided by the US Patent 4,054,403 are usual electrical heating elements which provide heat for melting thermoplastic material to be extruded. To obtain a complete evaporation of the material, for which the friction produced by the advancement gives not sufficient heat to entirely evaporate the water, a moderate heating is required and sufficient; the heaters (collars) disclosed in the above mentioned reference could not be used for the machine employed for the regeneration of plastic material.

The object of this invention is thus to produce a means for drying the plastic materials as above described, which can considerably reduce energy consumption during operation and which eliminates the installation costs of a fuel delivery system and/or the costs of satisfying excessive power needs, while improving the quality of the dried product.

The invention achieves this goal realizing the features as disclosed in claim 1.

Advantageous embodiments of the invention are featured in the dependent Claims 2 to 8.

The fundamental concept of the invention lies in drying the above mentioned materials not by direct action of the heat produced by fuel burners or by electrical resistors, but rather by the application of the well known principle of the archimedean screw press, with the aid of an electric motor and a reducer. The invention involves expelling the water by compressing the material, where said compression in itself generates heat to in turn contribute to the drying.

The dryer according to this invention consists essentially of a support chassis or casing and a normal screw conveyor of known type in a cylindrical channel on top. At one end of the channel, the screw is supported and rotates via tapered roller bearings, which can thus support considerable pressure. The remaining, longer section of the screw is overhung. The first section of the screw shaft, that is the entire supported rotating section is solid to withstand the stresses of the support in rotation. The second section of the shaft is hollow for its entire length as to lighten it.

The material to be dried is introduced from above through a hopper in the drier's channel and is advanced by the screw conveyor for a distance equal to the opening of the hopper, that is approximately half-way down the drying channel, while in the next section of the drying channel near the outlet the material is pressed out without the aid of the turns. Therefore, the shaft of the screw is equipped with turns only in the section between the flanges connecting the hopper to the drying channel, corresponding to the entrance. The extension of the turns in the section between the flanges connecting the hopper to the drying channel must be predetermined. Thus, such extensions must exceed the width between the flanges, without extending beyond a predetermined section of it. In fact, if the last turn of the screw conveyor towards the channel outlet is too much in proximity to the hopper downstream end, the material to be treated accumulates in proximity to this section, tending to block the channel inlet and rejecting said material towards the hopper. On the contrary, if the final turn of the screw conveyor ends too much beyond the extremity downstream the hoppec opening, the pressure on the material to expell water from it would be insufficient and would produce an obstruction between the upstream turns. An optimum limit for the final turn downstream the hopper has been verified. Exceeding said limit both, either in one and/or the other direction, means that the drier will not give the expected results.

The final turn of the screw goes beyond the final flange to end with a section disposed at 90° to the shaft, identical to the 90° section of the first turn. The entire section of the last turn, that is the section which extends beyond the limit of the flange connecting the hopper to the drying channel, is thicker than the other turns. The increased thickness begins at the shaft and tapers off towards the top, so that the turn has a triangular section with the base on the shaft. This device is designed to endure the greater pressures exerted in this area.

Thus, this section is the area of greater pressure. The plastic mass is harder on the inside than on the outside and tends to solidify in layers near the screw shaft, consequently blocking its rotation and therefore material advance.

To avoid this problem, the invention provides devices to break up the material, consisting of a section approximately semi-circular in shape. This section is applied to the shaft of the screw, starting from half-way between the last turn and its final section at 90° to the shaft, until about a half-pitch of the screw beyond its end, for an extension no greater than 180°. Said semi-circular section is not as high as the turns, and is oriented parallel to them. Along its peripherical edge, there is a sort of bevelling like a sharpening device, which is used like a knife to break up the hardened material and make it crumbly. In this way advancement into the final section of the drying channel is facilitated, where the material is pushed out without the aid of the turns and where, naturally pressure is greater.

According to the invention, water is expelled through mulitiple openings in the drier casing and all around it corresponding to the outlet section downstream from the final flange connecting the input hopper. To facilitate water expulsion in the high pressure area mentioned above, there is a fairly dense distribution of openings in the area extending from said final flange connecting the inlet hopper to just beyond the section of the last turn, descending at 90° to the shaft. The high pressure area thus begins immediately after the last turn, and it is here that most water is expelled. The distribution of the openings may be less dense in the next section.

For some plastic materials, the friction generated by the advancement does not create enough heat to completely evaporate the water. Therefore, to solve this problem, the invention provides for a hollow U-shaped collar welded around the final section of the advancement channel, downstream from the less dense distribution of openings, which contains a heating liquid circulated by a pump. This liquid is moderately heated by electrical resistances, with completely negligible consumption.

In order to facilitate compression inside the drying channel, contraction dvices are provided at its outlet consisting in four hinged elements at the opening of the channel so to shape a truncated cone opening tapering downstream the advancing direction. The elements are controlled by adjustable springs which operate the opening according to the pressure of the outcoming material, slowing its advance.

As hereinbefore mentioned, the shaft is hollow downstream the turns in the advancing direction of the material. As the shaft is subjected to the strong heat which develops because of the friction in the material to be treated, it is appropiate to provide a cooling of it. This is provided by a further feature of the invention, according to which a tubing of reduced section is placed therein, for an extent that can also be equal to the length of the hollow, and fixed on the free extremity of the shaft by a cap bearing an inlet opening and an outlet opening for the cooling water. Obviously the cap does not rotate together with the shaft.

The invention also provides, on the section of the screw shaft protruding from the outlet of the drying channel, a type of blade joined to the shaft which serves to break up the material discharged before it falls into the collector, from where a centrifuge will aspirate it and send it up toward a cyclone and then toward the final regeneration phase.

The advantages of the screw drier according to the invention may readily be deduced from the above discussion. The material is dried using an electric motor with reducer, leading to considerable operational savings, both with respect to electricity use and with respect to the consumption of diesel fuel, steam or other heat source. A further considerable saving is achieved by eliminating the cost of large power requirements, both in the initial contact with the supplier and in each monthly bill, since said cost is fixed and independent of effective consumption. At the same time, the costs of installing and maintaining a diesel fuel system are eliminated, as of course are the operational fuel costs. Moreover, the quality of the product in terms of the final regeneration phase is considerably enhanced, since expulsion of the water due to compression is assisted by the evaporation due to the heat generated by friction and, if necessary, by that from the U-shaped collar with the circulating heating liquid. Finally, an increase in hourly yield within reasonable limits maintains the power used by the electric motor at the same level, while using an electrical resistance tunnel would require considerably increased power.

The invention will now be described in more detail, in an exemplary and non-limiting way, with reference to a preferred embodiment represented in the accompanying drawings wherein:

Figure 1 shows a schematic elevational view of a complete line for regenerating polyethylene,

Figure 2 is a side elevational view of the screw drier according to the invention,

Figure 3 is a vertical cross sectional view of the drier of Figure 2,

Fig. 4 is a front elevational view of the drier of Figure 2, and

Figure 5 is a cross sectional view of the drying channel in the area of the semicircular section operating like a knife.

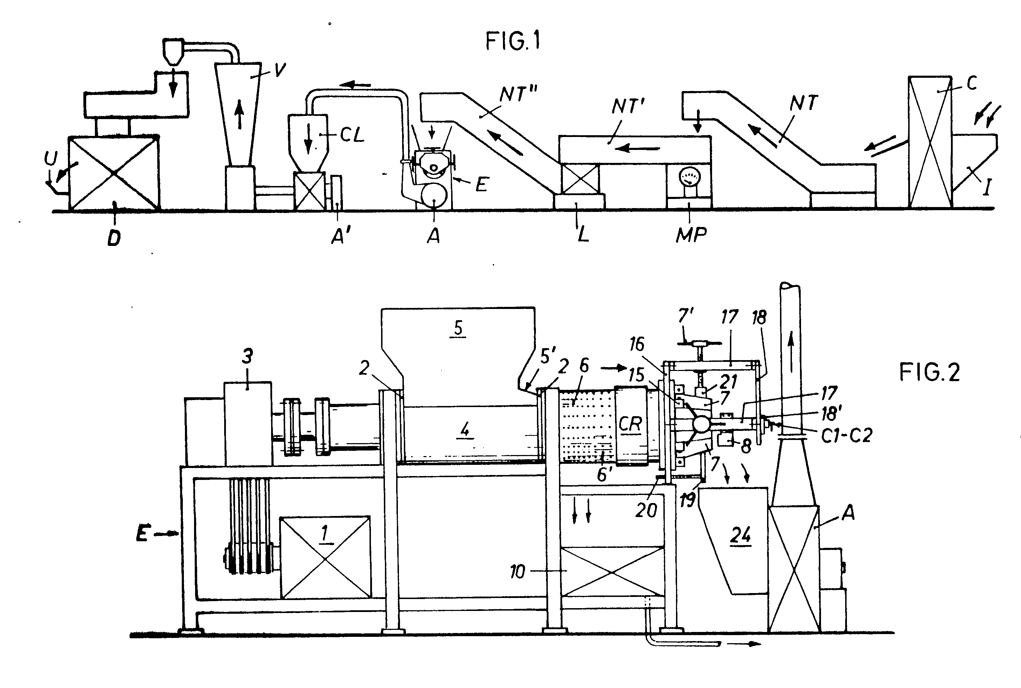

Figure 1 shows a line for the recovery and regeneration of plastic materials, particularly polyethylene.

In the sequence of the operation, 1 shows the introduction of material in the shearing machine C, followed by a chain conveyor NT which deposits the cut material on a scale MP. From there, a carpet conveyor belt NT' brings the material to a washing container L, from where a chain conveyor brings it to the drayer E. A first aspirator A draws the material into a cyclone CL, from where a second aspirator A' sends it to a container V for suspension ventilation. The material then passes to the densifier D and outlet U.

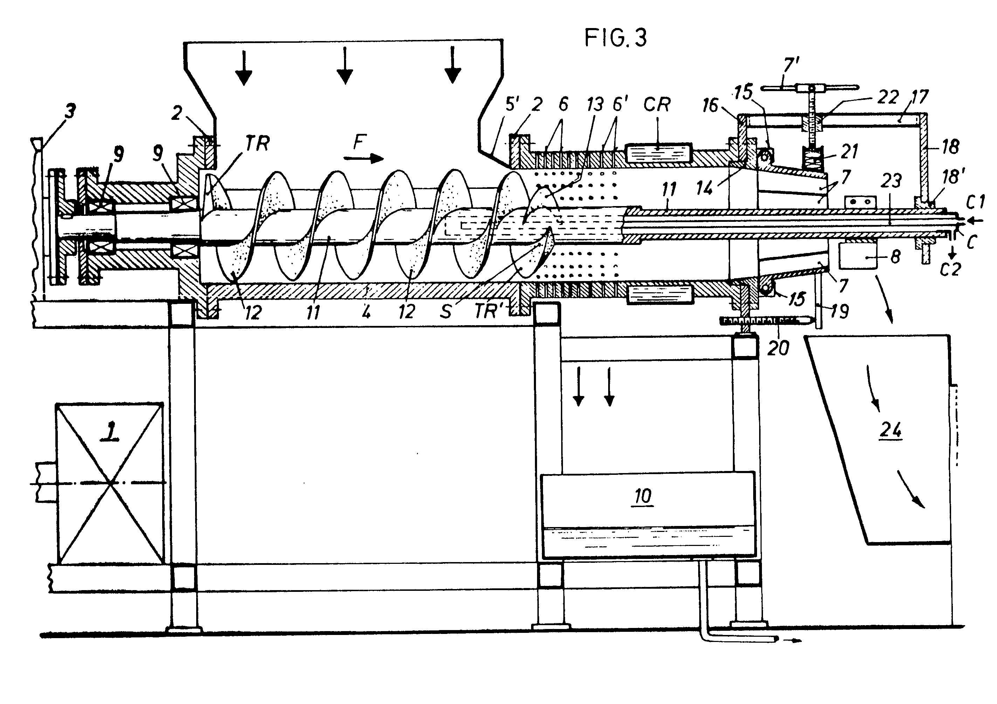

Figure 2 shows the screw drier according to the invention, indicated generally by E. The arrow F indicates the advancement direction. Via a reducer 3, a motor 1 powers screw-conveyor inside drying channel 4, extending from the first connection flange 2 for hopper 5 for material input, to the end of the drier opposite reducer 3. The more and less dense distributions of openings 6, 6' are also shown, although they are more clearly visible in Figure 3. The collar CR wherein the heating liquid circulates to facilitate the water evaporation in materials for which the friction generated by the advancing does not produce enough heat to this purpose should also be noted. A blade 8 for breaking up the discharged material is also shown. The complex of means 7 which contribute to the outlet back pressure will be hereinbelow more detailed referring to Figure 3.

Figure 3 shows the drying process of the material through the whole channel in a more comprehensive way. The material is put in channel 4 through the hopper 5 and is advanced by the screw conveyor, the shaft 11 thereof being provided with suitably determined, inclined and shaped turns 12 for the push of the material coming from the preceeding working phase. In proximity to the second fixing flange 2', the hopper opening enters channel 4 with an inclined surface 5' as to facilitate the material inlet. As already disclosed, the screw conveyor is provided with turns 12 only in the section between the first connection flange 2 for the hopper 5 of channel 4 and the second flange 2' connecting said hopper to said channel. The final turn 12 extends beyond the limit of flange 2' to end in the right angle section TR', disposed at 90° to shaft 11, in the same way as the initial rectilinear section TR of the first turn. It should be noted that the thickness S of the final turn 12 including section TR' at 90° to the shaft is ·increased in respect to the other turns, and this increase begins from the base tapering towards the top in shape of a triangle with the base in the shaft.

Therefore, starting from the final turn 12 of the shaft 11, and going toward the outlet, the action of the screw conveyor 12 to push the material out stops. This thus creates an area of maximum force, in which the material continues to advance to the outlet but under considerably more stress than in the preceding section of channel 4. To prevent hardening of the material and to overcome its tendency to solidify, particularly in layers near the shaft 11, a section 13 approximately semicircular in shape is mounted on the screw shaft 11, starting from half-way between the last turn and the section TR' at 90° to the shaft and continuing beyond said section TR', for an extension of no more than 180°. As shown in Figure 3, section 13 is not as high as turns 12 and is parallel to them. Said section 13 thus serves to break up the hardened material and to facilitate advancement into the high pressure area in the direction of the outlet.

Water is expelled from the material in the area of the drying channel 4 at the outlet end through openings 6, 6' distributed all around the drier casing of channel 4, i.e. more densely in the high pressure section and less densely in the following one. Figure 3 shows how the openings 6 are denser in the area from the connection flange 2' until just beyond the section TR' of the last turn, at 90° to the shaft. It also shows how openings 6' are less dense in the subsequent section. In other words, the invention provides greater possibility of expulsion in the high pressure section. The water expelled from openings 6, 6' is collected in tank 10 and disposed of.

The screw shaft 11 is solid in the first section where it rotates on tapered roller bearings 9 placed at distance and designed to withstnd the great stress on shaft 11 which, for the remaining section, is overhung. For the other section, the shaft 11 is hollow to lighten it.

Downstream from the less dense openings 6' is the U-shaped collar CR. As already mentioned, a moderately heated liquid is circulated in said collar for certain materials where the friction generated by advancement does not produce sufficient heat to completely evaporate the water.

Thus the material advanced by the screw, broken up by section 13 and eventually heated by collar CR, approaches the outlet of drying channel 4.

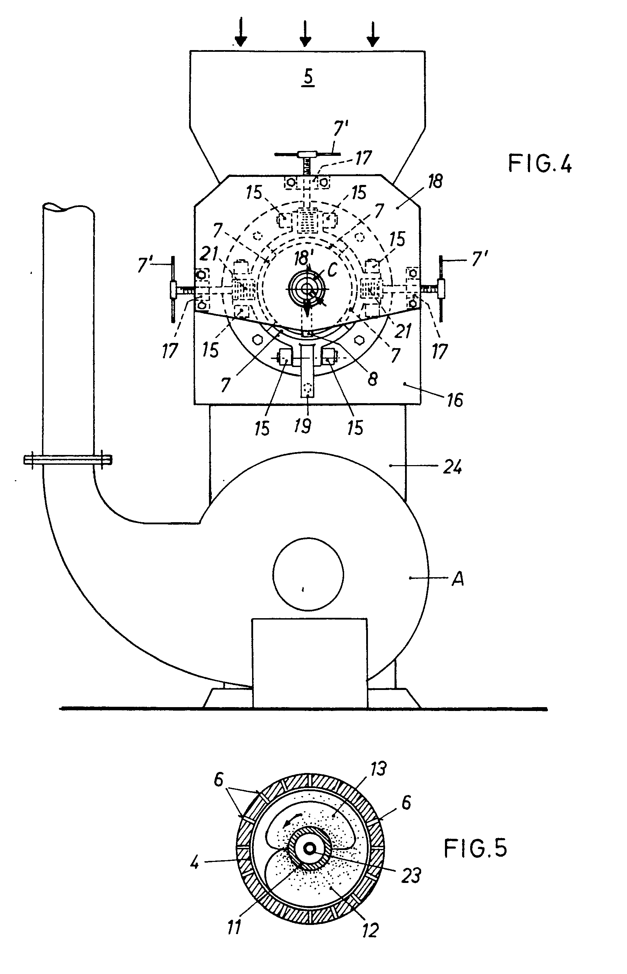

Hereinbelow described are, referring to Figures 2, 3 and 4 throttling means adapted to facilitate a back-pressure on the outcoming material, blocking its advance to obtain a greater expulsion.

At the channel outlet extremity a plate 16 is fixed for example by screws on said channel 4. Plate 16 is quadrangular shaped, larger than the diameter of channel 4 and shows centrally an opening, the extension thereof being substantially equal to the diameter of said channel. On this plate a circular collar 14 is fixed by bolts showing backwardly a truncated cone shape tapering in the advancing direction of the material. This shape operates a first blocking action on the outcoming material. On the external surface of collar 14, in correspondence to four diametrically opposed points, bearing means 15 are provided, to each one of said points an arc circular shaped element 7 is hinged. In the resting position these bearing means are supported by the outer surface of the collar 14, while their inner surface appears as an aligned extension of the truncated cone shape of collar 14. Upwardly and laterally of plate 16, in proximity to each of the corresponding three bearing means 15, an arm 17 is fixed by one end on said plate, the other end thereof being supported by a plate 18 in turn supported at the shaft extremity 11 by a sleeve 18'. On the outer surface the upwardly and laterally mounted elements 7, at the extremity thereof, a little glass shaped container is provided wherein some cup springs are placed. These cup springs and consequently the three said elements 7 are controlled by adjusting screw provided with a handwheel 7' being supported in a threaded bearing 22 of the corrisponding arm 17. The back-pressure of the outcoming material can thus elastically be controlled furthermore facilitating the material compression inside of channel 4 and consequently water expulsion. Material pressure variations within predetermined limits can also be herewith automatically regulated. Element 7 downwardly hinged mounted on collar 14 is instead not elastically regulated by a bar 19 operated by a bolt 20, to avoid obstruction in the material outlet area.

Referring to Figure 3, a further feature provided by the invention consists in a tubing 23 placed into the cavity of shaft 11 and fixed at the outer end thereof by a cap C. In respect to the shaft 11 the cap C is not rotatably mounted. Said cap being provided by a connection C1 for the inlet of the cooling means, and a connection C2 for the outlet thereof. The cooling means, outcoming from the inner end of tubing 23, spread in the cavity of shaft 11 reducing the effect of strong heat transmitted to said cavity from the enveloping material. The inlet and the outlet of the cooling means can be regulated by corresponding valves.

Finally, at the end of shaft 11, downstream from element 7 a blade 8 is joined to said shaft to rotate therewith which acts as a blade to break up the material being discharged before it falls into container 24, from where a centifuge sends it to the subsequent phases of the operation.

It may be noted that a screw drier according to the invention designed for a yield of approximately 400kg/h uses approximately 20Kw/h. The same yield from an electrical tunnel would require a power of approximately 200 Kw/h, or the equivalent in diesel fuel or steam. Of course, to these costs must be added that of a contract for that Kw potential when it is entered into and prorated payments thereof. Moreover, it is significant that increasing the hourly yield by 100kg has no effect on the power used by the drier according to this invention, while an electrical resistance tunnel would require an increase of approximatley 40%.

**Claims**

1. A drier particularly for drying wet plastic materials in small particles, to be treated in a recovery and regeneration line for wasted plastics, comprising a drier casing into which a horizontal cylindrical channel (4) is arranged for drying the material, said channel being provided with a feeding hopper (5) and having an upper inlet opening at one end, and an adjustable output opening at the other end, a screw conveyor mounted within said channel for the material to be treated consisting in a shaft (11) and a first helical vane (12), the channel (4) forming a first feeding chamber and a second drying chamber connected in series to one another, and the shaft (11) having a hollow portion provided with cooling means, characterized in that:
— the drier, at the inlet opening, comprises first and final flanges (2, 2') connecting the feed hopper to the channel, the flanges being spaced in the same distance as the one between the first and final turn of the first vane (12) in correspondence to said final flange (2') the hopper opening enters the channel with an inclined surface;

— the first helical vane (12) extends along said first feeding chamber and consists of laminar helicoidal turns and of a final turn (TR'), the final turn, in a length of one turn, extending into said second drying chamber and having the same radius as the preceding turns and a cross-sectional configuration in the form of a right triangle so that the downstream surface of said final turn (TR') forms an oblique helicoidal surface which imparts to the material being treated a pressure which increases starting from the outer perphery of the final turn (TR') to the shaft body;

— a half-turn segment (13) of a second laminar helical vane is mounted on the shaft (11) for breaking up the material having cutting edges and the same pitch as said first vane (12) and a radial height, starting from said shaft (11), approximately equal to a one-half of the radial height of said vane (12), so that the upstream end of said half-turn segment (13) is placed at substantially the same angular position as the downstream end of said final turn (TR') but displaced upstream therefrom substantially a distance of a half-pitch;

— a plurality of annular series of liquid outlet holes (6, 6'), are arranged in the wall of a first upstream portion of said second chamber and being distributed all around the channel;

— heating means (CR) are incorporated in the wall of a central portion of said second chamber to facilitate drying of the material passing therethrough in special weather conditions, the heating means being in the form of a heating collar containing a heating liquid therein;

— means (14) are arranged for resisting to the discharge of the material through the output opening in order to produce a high pressure region in said second chamber between the downstream end of the final turn (TR') and the discharge end of the channel (11);

— a device (7) is operatively mounted on said discharge end for adjusting the area of said discharge end; and

— a means is provided for breaking up the discharge material.

2. A drier as claimed in claim 1, wherein the upstream surface of the final turn (TR') of said first helical vane (12) extends at 90° to the shaft, the thickness of said final turn is greater than that of the other turns, the base of said right triangle is at the shaft and the hypotenuse defines the downstream surface of said final turn.

3. A drier as claimed in claim 1, wherein the annular series of outlet holes (6, 6') are spaced apart from each other of increasing distances starting from the entrance into said second chamber.

4. A drier as claimed in claim 1, wherein said means (14) for resisting to the discharge of the material consists of a truncated conical surface tapered in the discharge direction.

5. A drier as claimed in claim 1, wherein said device (7) for adjusting the area of the discharge end comprises a flap door elements pivotally mounted adjacent the discharge end of said mean (14) for resisting to the discharge of the material, said device being controlled by a hand wheel (7') supported by said casing and permittimg to adjust the mutual position of said flap door elements with respect to said discharge end, said flap door elements having an approximately inner conical surface tapered toward said shaft (11).

6. A drier as claimed in claim 1 wherein on the end of the shaft (11) extending out of the output opening of the channel (11) a blade (8) is mounted, so as to rotate together with said shaft (11) and to break up the material being discharged through said discharge orifice, said blade member being substantially planar, having cutting edges and projecting substantially radially from one side of shaft (11).

7. A drier as claimed in claim 6, wherein means are provided to support said shaft (11) which comprise conically tapered roller bearings (9) mounted in said casing in spaced relationship so that said shaft is supported in a cantilever manner in the second chamber.

8. A drier as claimed in claim 1, wherein said half-turn segment (13) extends in parallel to the turns of said first helical vane (12), and has an outer peripheral beveled knife edge to cut into and break up the material passing to the output opening of said chamber.

**Patentansprüche**

1. Ein Trockner insbesonders zum Trocknen von, in einer Wiedergewinnungs- und Wiederverwertungslinie für Kunststoffabfälle zu behandelndem, feuchtem Kunststoffmaterial aus kleinen Teilchen, mit einem Trocknergehäuse, innerhalb welchem eine horizontaler zylindrischer Kanal (4) zum Trocknen des Materiales angeordnet ist, welcher Kanal mit einem Zuführtrichter (5) versehen ist und eine obere Einlaßöffnung an einem Ende und eine verstellbare Ausgabeöffnung am anderen Ende besitzt, wobei innerhalb dieses Kanales ein Schneckenförderer für das zu behandelnde Material angebracht ist, welcher aus einer Welle (11) und einer ersten schraubenförmigen Schaufel (12) besteht, wobei der Kanal (4) eine erste Zuführkammer und eine zweite Trocknungskammer bildet, die in Reihe hintereinander angeordnet sind, und die Welle (12) einen mit Kühlmittel versehenen hohlen Abschnitt besitzt, dadurch gekennzeichnet:

— daß der Trockner an der Einlaßöffnung erste und letzte Flansche (2, 2') aufweist, die den Zuführtrichter mit dem Kanal verbinden, daß die Flansche in demselben Abstand voneinander angeordnet sind, wie jener zwischen der ersten und letzten Windung der ersten Schaufel (12), daß die Trichteröffnung korrespondierend zu diesem letzten Flansch (2') mit einer geneigten Fläche in den Kanal eintritt;

— daß sich die erste schraubenförmige Schaufel (12) entlang dieser ersten Zuführkammer erstreckt und aus laminaren Schraubenflächenwindungen und einer letzten Windung (TR') besteht, wobei sich die letzte Windung, in der Länge einer Windung, in diese zweite Trocknungskammer hineinerstreckt und den gleichen Radius wie die vorhergehenden Windungen und eine Querschnittsgestalt in der Form eines rechtwinkeligen Dreiekes besitzt, sodaß die stromabgelegene Fläche dieser letzten Windung (TR') eine geneigte Schraubenfläche bildet, welche dem zu behandelnden Material einen Druck erteilt, welcher beginnend am Außenumfang der letzten Windung (TR') zum Wellenkörper hin zunimmt;

— daß zum Aufbrechen des Materiales ein eine halbe Windung aufweisendes Segment (13) einer zweiten laminaren schraubenförmigen Schaufel auf der Welle (11) montiert ist, welches Schneidkanten und die gleiche Steigung wie die erste Schaufel (12) und eine radiale Höhe beginnnend von dieser Welle (11) die etwa gleich dem Eineinhalbfachen der radialen Höhe dieser Schaufel (12) besitzt, sodaß das stromaufgelegene Ende dieses eine halbe Windung aufweisenden Segmentes (13) im wesentlichen in der gleichen Winkelstellung wie das Stromabgelegene Ende dieser letzten Windung (TR') aber im wsentlichen um eine Entfernung einer halben Steigung stromauf davon verlagert angeordnet ist;

— daß in der Wand eines ersten stromaufgelegenen Teiles dieser zweiten Kammer eine Vielzahl von ringförmigen Reihen von Flüssigkeitsauslaßöffnungen (6, 6') angeordnet und rund den Kanal verteilt sind;

— daß in der Wand eines Mittelabschnittes dieser zweiten Kammer Heizmittel (CR) eingebaut sind, um das Trocknen des durchgehenden Materiales in speziellen Wetterzuständen zu erleichtern, wobei das Heizmittel die Form eines Heizkragens hat, der eine Heizflüssigkeit enthält;

— daß Mittel (14) für den Widerstand gegen den Materialaustrag Materiales durch die Ausgabeöffnung angeordnet sind, um eine Hockdruckzone in dieser zweiten Kammer zwischen dem stromabgelegenen Ende der letzten Windung (TR') und dem Austragende des Kanales (11) zu erzeugen;

— daß zum Einstellen der Fläche dieses Austragendes eine Vorrichtung (7) an diesem Austragende funktionsfähig montiert ist, und

— daß ein Mittel zum Aufbrechen des ausgetragenen Materiales vorgeshen ist.

2. Ein Trockner wie in Anspruch 1, beansprucht, wobei die stromaufgelegene Fläche der letzten Windung (TR') dieser ersten schraubenförmigen Schaufel (12) sich unter 90° von der Welle erstreckt, die Dicke der letzten Windung größer ist als die der anderen Windungen, die Basis dieses rechtwinkeligen Dreiecks an der Welle liegt und die Hypotenuse die stromabgelegene Fläche dieser letzten Windung definiert.

3. Ein Trockner wie in Anspruch 1 beansprucht, wobei die ringförmigen Reihen der Auslaßlöcher (6, 6') beginnend vom Eintritt in diese zweite Kammer In zunehmenden Abständen voneinander entfernt angeordnet sind.

4. Ein Trockner wie in Anspruch 1 beansprucht, wobei dieses Mittel (14) für den Widerstand gegen den Materialaustrag aus einer in Austragsrichtung sich verjüngenden kegelstumpfförmigen Fläche besteht.

5. Ein Trockner wie in Anspruch 1 beansprucht, wobei diese Vorrichtung (7) zum Einstellen der Fläche des Austragendes Klapptürelemente aufweist, welche dem Austrittsende dieses Mittels (14) für den Widerstand gegen den Materialaustrag benachbart schwenkbar montiert sind, wobei diese Vorrichtung durch ein Handrad (7') gesteuert ist, welches von diesem Gehäuse getragen wird und das Einstellen der gegenseitigen Stellung dieser Klapptürelemente in Bezug auf dieses Austragsende erlaubt, wobei diese Klapptürelemente eine sich zum dieser Welle (11) verjüngende näherungsweise komische Innenfläche besitzen.

6. Ein Trockner wie in Anspruch 1 beansprucht, wobei an dem sich aus der Austragöffnung des Kanales hinauserstreckenden Ende der Welle (11) ein Messer (8) montiert ist, um zusammen mit der Welle (11) zu rotieren und das durch diese Austragöffnung ausgetragene Material aufzubrechen, wobei dieses Messerelement im wesentlichen eben ist, Schneidkanten aufweist und von einer Seite der Welle (11) im wesentlichen radial vorsteht.

7. Ein Trockner wie in Anspruch 6 beansprucht, wobei Mittel zum Tragen dieser Welle (11) vorgesehen sind, welche konische Kegelrollenlager (9) aufweisen, die in diesem Gehäuse so im Abstand voneinander montiert sind, daß diese Welle in der zweiten Kammer freitragend gelagert ist.

8. Ein Trockner wie in Anspruch 1 beansprucht, wobei dieses eine halbe Windung aufweisende Segment (13) sich parallel zu den Windungen dieser ersten Schraubenförmigen Schaufel (12) erstreckt und eine abgeschrägte Messerkante am Außenumfang besitzt, um in das zur Ausgabeöffnung dieser Kammer durchgehende Material Hineinzuscheiden und dieses aufzubrechen.

**Revendications**

1. Presse, en particulier pour sécher des matériaux plastiques humides sous la forme de petites particules destinées à être traitées dans une chaîne de récupération et de régénération pour plastiques usagés, comprenant un carter de presse à l'intérieur duquel est ménagé un canal cylindrique horizontal (4) pour sécher le matériau, ledit kanal étant pourvu d'une trémie d'alimentation (5) et présentant une ouverture supérieur d'entrée à une extrémité et une ouverture de sortie réglable à l'autre extrémité, un convoyeur à vis monté à l'intérieur dudit canal pour le matériau à traiter constitué par un arbre (11) et une première turbine en hélice (12), le canal (4) formant une première chambre d'alimentation et une seconde chambre de séchage reliées ensemble en série, et l'arbre (11) ayant une partie creuse équipée de moyens de refroidissement, caractérisée en ce que:

— la presse, à son ouverture d'entrée, comprend une première bride et une bride terminale (2, 2') reliant la trémie d'alimentation au canal, les brides étant écartées entre elles de la même distance que celle séparant la première et la dernière spires de la première turbine (12), l'ouverture de trémie pénétrant dans le canal, en correspondance avec ladite bride terminale (2'), selon une surface inclinée;

— la première turbine en hélice (12) s'étend le long de ladite première chambre d'alimentation et est constituée de spires laminaires en hélice et d'une spire finale (TR'), la spire finale, sur la longueur d'un tour, s'étendant dans ladite seconde chambre de séchage et présentant le même rayon que les spires précédentes et en coupe transversale une configuration en triangle rectangle telle que la surface aval de ladite spire terminale (TR') forme une surface en hélice oblique qui applique au matériau traité une pression qui va en croissant depuis le pourtour extérieur de la spire terminale (TR') jusqu'au corps de l'arbre;

— une portion d'un demi-tour (13) d'une seconde turbine laminaire en hélice est montée sur l'arbre (11) pour fragmenter le matériau, ladite portion présentant des bords coupants et le même pas que ladite première turbine (12) et une hauteur radiale, à compter dudit arbre (11), qui est approximativement égale à la moitié de la hauteur radiale de ladite turbine (12), de sorte que l'extrémité amont de ladite portion d'un demi-tour (13) est placée pratiquement à la même position angulaire que l'extrémité aval de ladite spire terminale (TR') mais en étant déplacée vers l'amont à partir d'elle d'une distance que correspond pratiquement à une demi-pas;

— plusieurs séries annulaires d'ouvertures de sortie de liquide (6, 6') qui sont ménagées dans la paroi d'une première partie amont de ladite seconde chambre en étant distribuées tout autour du canal,

— des moyens de chauffage (CR) sont incorporés dans la paroi d'une partie centrale de ladite seconde chambre pour faciliter le séchage du matériau qui la traverse dans des conditions particulières de température, les moyens de chauffage ayant la forme d'un collier chauffant contenant un liquide do chauffage;

— des moyen (14) sont disposés pour résister au déchargement du matériau à travers l'ouverture de sortie de façon à créer dans ladite seconde chambre une région à forte pression entre l'extrémité aval de la spire terminale (TR') et l'extrémité de déchargement du canal (4);

— un dispositif (7) est monté sur ladite extrémité de déchargement pour règler de façon active la surface de ladite extrémité de déchargement, et

— un moyen est prévu pour fragment le matériau déchargé.

2. Presse selon la revendication 1, dans laquelle la surface amont de la spire terminale (TR') de ladite première turbine en hélice (12) s'étend à 90° par rapport à l'arbre, l'épaisseur de ladite spire terminale étant supérieure à celle des autres spires, la base dudit triangle rectangle étant disposée sur l'arbre et l'hypothénuse définissant la surface aval de ladite spire terminale.

3. Presse selon la revendication 1, dans laquelle les séries annulaires d'ouvertures de sortie (6, 6') sont écartées les unes des autres de distances qui vont en croissant à partir de l'entrée dans la seconde chambre.

4. Presse selon la revendication 1, dans laquelle ledit moyen (14) pour résister au déchargement du matériau consiste en une surface conique tronquée, effilée dans la direction de déchargement.

5. Presse selon la revendication 1, dans laquelle ledit dispositif (7) de réglage de la surface de l'extrémité de déchargement comprend des éléments de porte formant volets montés pivotants au voisinage de l'extrémité de déchargement dudit moyen (14) résistant au déchargement du matériau, ledit dispositif étant commandé par un volant manuel (7') porté par ledit carter et permettant de régler la position mutuelle desdits éléments de porte formant volets par rapport à ladite extrémité de déchargement, lesdites éléments de porte formant volets présentant une surface intérieure approximativement conique dont la pointe est dirigée vers ledit arbre (11).

6. Presse selon la revendication 1 dans laquelle, sur l'extrémité de l'arbre (11) s'étendant au-delà de l'ouverture de sortie du canal (4), est montée une lame (8) de façon que celle-ci tourne avec ledit arbre (11) et fractionne le matériau qui est déchargé par l'orifice de déchargement, ladite plaque étant pratiquement plane, présentant des bords coupants et faisant saillie pratiquement radialement à partir d'un côté de l'arbre (11).

7. Presse selon la revendication 6 dans laquelle des moyens sont prévus pour supporter ledit arbre (11) et comprennent des paliers à rouleaux (9) effilés en forme de cône et montées à l'intérieur dudit carter en des positions écartées de façon que ledit arbre soit supporté en porte-à-faux dans la seconde chambre.

8. Presse selon la revendication 1, dans laquelle ladite partie (13) d'un demi-tour s'étend parallèlement aux spires de ladite première turbine en hélice (12) et présente un bord extérieur périphérique tranchant en biseau pour couper et fractionner le matériau passant vers l'ouverture de sortie de ladite chambre.

FIG.1

FIG.2

FIG.3

EP 0 152 724 B1

FIG.4

FIG.5